## Europäisches Patentamt

## European Patent Office

## Office européen des brevets

(11) Veröffentlichungsnummer: **0 037 940**
**B1**

(12) # EUROPÄISCHE PATENTSCHRIFT

(45) Veröffentlichungstag der Patentschrift:
**11.07.84**

(51) Int. Cl.³: **H 04 Q 3/00,** H 04 M 19/00, H 04 B 1/58

(21) Anmeldenummer: **81102317.5**

(22) Anmeldetag: **27.03.81**

(54) **Schaltungsanordnung zum zweidrähtigen Anschluss eines Fernsprechteilnehmers an je eine Leitung für abgehende und ankommende Signale.**

(30) Priorität: **14.04.80 DE 3014187**

(43) Veröffentlichungstag der Anmeldung:
**21.10.81 Patentblatt 81/42**

(45) Bekanntmachung des Hinweises auf die Patenterteilung:
**11.07.84 Patentblatt 84/28**

(84) Benannte Vertragsstaaten:
**AT BE CH FR GB IT LI NL**

(56) Entgegenhaltungen:
**FR - A - 2 275 098**
**FR - A - 2 373 201**
**US - A - 4 041 252**

**INTERNATIONAL SWITCHING SYMPOSIUM, 7.-11. Mai 1979, Seiten 149/156 Paris, FR. P.J. HANSEN: "Autocommutateur privé commandé par microcalculateur avec reseau de connexion PAM" IBM TECHNICAL DISCLOSURE BULLETIN, Band 16, Nr. 4, September 1973, Seiten 1173-1174 New York, U.S.A. M.A. PATTEN: "Electronic hybrid telephone line pack"**

(73) Patentinhaber: **Nixdorf Computer Aktiengesellschaft, Fürstenallee 7, D-4790 Paderborn (DE)**

(72) Erfinder: **Scholich, Peter Ing. grad., Schillerstrasse 23, D-4794 Schloss Neuhaus (DE)**

(74) Vertreter: **Schaumburg, Schulz-Dörlam & Thoenes, Mauerkircherstrasse 31 Postfach 86 07 48, D-8000 München 86 (DE)**

## Beschreibung

Die Erfindung bezieht sich auf eine Schaltungsanordnung zum zweidrähtigen Anschluss eines Fernsprechteilnehmers nach dem Oberbegriff des Anspruchs 1.

Eine derartige Schaltungsanordnung ist bekannt (DE-OS 2 649 024). Hierbei ist die eine Teilnehmerleitungsader mit der zugeordneten Stromquelle über die Reihenschaltung einer der Schleifenstromerfassung dienenden Sendediode eines Optokopplers und eines Widerstands verbunden, so dass diese Reihenschaltung und die Impedanz der Teilnehmerleitung zwei in Reihe liegende Zweige einer Brückenschaltung bilden; zwei weitere Zweige sind von der Reihenschaltung eines Widerstands und eines Kondensators bzw. von einem Widerstand gebildet, die zwischen der anderen Teilnehmerleitungsader und dem Verbindungspunkt der aus Senderdiode und Widerstand bestehenden Reihenschaltung mit der zugeordneten Stromquelle liegen, und in die Messdiagonale dieser Brückenschaltung ist die Sendediode eines weiteren Optokopplers eingeschaltet, dessen Empfangsdiode über einen zwischengeschalteten weiteren Verstärker den ersten Eingang des die abgehenden Signale abgebenden Verstärkers beaufschlagt. Dabei bewirken die der Stromerfassung dienende Senderdiode und der in Reihe mit ihr in einem Brückenzweig liegende Widerstand eine Unsymmetrie der Teilnehmerleitung, die mit relativ grossem Schaltungsaufwand beseitigt werden muss. Daneben erfordern auch die genannte Brückenschaltung und die ihr im Übertragungsweg der abgehenden Signale nachgeschalteten weiteren Schaltungsmittel einen grossen Aufwand.

Der Erfindung liegt die Aufgabe zugrunde, eine Schaltungsanordnung der eingangs genannten Art derart auszubilden, dass die Symmetrierung mit geringem Schaltungsaufwand erfolgt und dass eine gewollt auftretende Leitungs-Unsymmetrie über ein digitales Ausgabesignal angezeigt wird, und dass auch bei Leitungsunsymmetrie die Gewinnung der abgehenden Signale aus den Signalen auf der Teilnehmerleitung nicht beeinträchtigt wird, so dass in dem die abgehenden Signale abgebenden Verstärker jederzeit eine genaue Kompensation bezüglich der ankommenden Signale erfolgt. Dabei sollen eine hohe Unsymmetriedämpfung, eine hohe Gleichtaktunterdrückung und eine gute Sendedämpfung erzielt werden.

Die Aufgabe wird gemäss der Erfindung dadurch gelöst, dass eine Schaltungsanordnung der eingangs genannten Art mit den im Kennzeichenteil des Anspruchs 1 genannten Merkmalen ausgebildet ist.

Bei der Schaltungsanordnung gemäss der Erfindung bewirken die beiden mit ihren Hauptstromstrecken in Reihe geschalteten Transistoren keine Symmetriestörung der Teilnehmerleitung. Durch ausschliesslich wechselspannungsmässige Ankopplung an die Teilnehmerleitungsadern können auch Nebenstellenorgane angeschlossen werden, die keinen galvanischen Spannungsabfall hervorrufen. Die Reihenschaltung der Hauptstromstrecken der Transistoren kann unmittelbar zum Eingang des die abgehenden Signale abgebenden Verstärkers geführt werden. Es ergibt sich so eine äussert einfache Schaltung.

Es ist ferner aus der US-A-4 041 252 eine Schaltungsanordnung bekannt, die einen Zweidraht-Verbindungsweg mit einem Vierdraht-Verbindungsweg koppelt und mit einem Differenzverstärker arbeitet, der eine ähnliche Funktion hat wie die bei der Erfindung vorgesehene Transistorschaltung. Die Verwendung eines Differenzverstärkers führt jedoch zu Problemen, die die Erfindung beseitigt. Bei Differenzverstärkern müssen die Widerstände an den Eingängen sehr genau übereinstimmen, so dass hier stets in der Praxis ein Abgleich erforderlich ist, um Gleichtaktstörungen zu vermeiden. Im Gegensatz dazu ist bei der Erfindung der Strom durch die Hauptstromstrecken der beiden Transistoren gleich und nur von der Basis-Differenzspannung der Transistoren abhängig. Ein Abgleich ist hier nicht erforderlich.

Ferner sind Differenzverstärker für relativ hohe Versorgungsspannungen in Fernsprechsystemen kostspieliger als Einzeltransistoren und haben darüber hinaus eine relativ hohe Stromaufnahme von einigen Milliampere. Mit den bei der Erfindung vorgesehenen Transistoren ergibt sich in der Praxis aber nur eine Stromaufnahme von etwa 200 Mikroampere. Dies ist besonders wichtig für den Fall der Batteriespeisung bei Ausfall der Netzstromversorgung.

Ausgestaltungen der Schaltungsanordnung sind in den Unteransprüchen angegeben, von denen die Ansprüche 6, 7, 12 und 14 zwar Merkmale betreffen, die für sich aus der FR-A-2 373 201 bekannt sind, die gleichfalls eine Zweidraht-Vierdraht-Verbindung zeigt, jedoch im Zusammenhang mit der Erfindung besondere Vorteile mit sich bringen, die aus der folgenden Beschreibung hervorgehen.

Die Erfindung wird im folgenden anhand der Zeichnungen näher erläutert, in denen Ausführungsbeispiele dargestellt sind. Es zeigen:

Fig. 1 ein erstes Ausführungsbeispiel einer Schaltungsanordnung zum zweidrähtigen Anschluss eines Fernsprechteilnehmers und

Fig. 2 ein weiteres Ausführungsbeispiel einer solchen Schaltung.

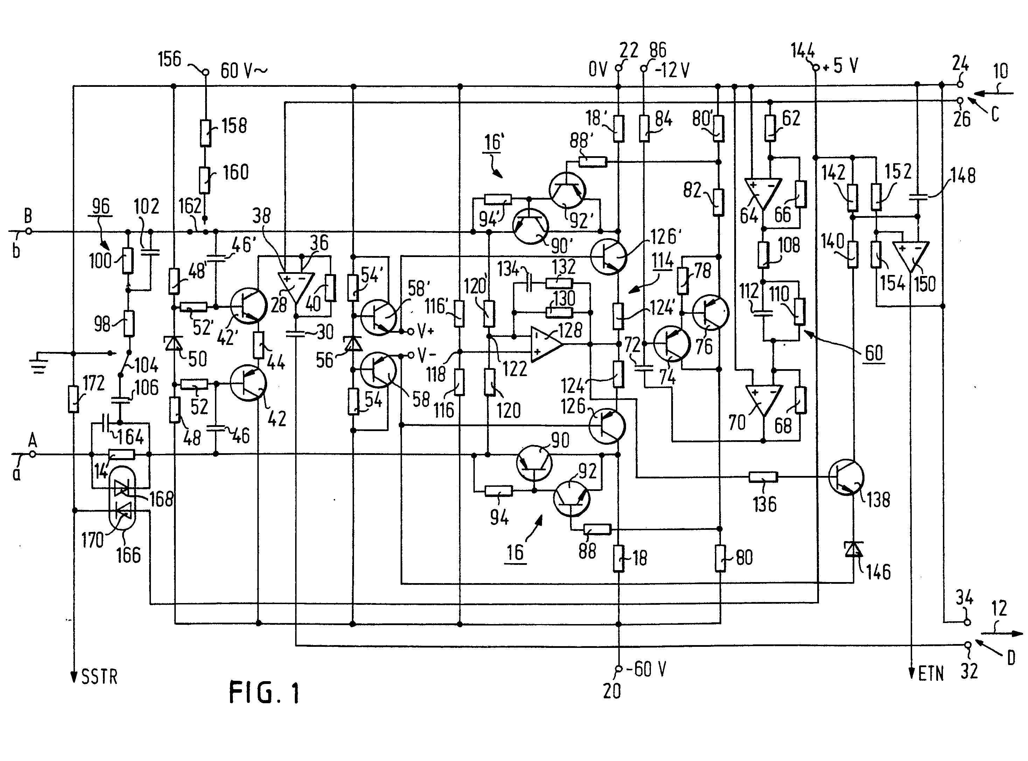

Die in Fig. 1 dargestellte Schaltungsanordnung dient zum Anschluss eines nicht dargestellten Teilnehmerapparats über die Adern a, b einer Teilnehmerleitung an die Anschlüsse A, B sowie zur Speisung der Teilnehmerleitung. Weiter hat die Schaltungsanordnung die Funktion einer Zweidraht-Vierdraht-Gabelschaltung mit den Anschlüssen A, B für die Teilnehmerleitung, einem Eingang C für ankommende Niederfrequenzsignale (Richtung des Pfeiles 10) und einem Ausgang D für abgehende Niederfrequenzsignale (Richtung des Pfeiles 12). Vom Teilnehmerapparat über die Teilnehmerleitung und die Anschlüsse A, B kommende Niederfrequenzsignale sollen ausschliesslich zum Ausgang D, nicht jedoch zum Eingang C übertragen werden. Am Eingang C ankommende Signale sollen ausschliesslich über die Anschlüsse A, B zum Teilnehmerapparat, nicht jedoch zum Ausgang D übertragen werden. Weiter hat die Schaltungsanordnung auch die Aufagben, den Teilnehmerapparat erforderlichenfalls mit einer Rufwechselspannung für den Wecker des Teilnehmerapparats zu versorgen, den in der Teilnehmerleitung fliessenden Strom zu erfassen und bei Erdschluss einer der Teilnehmerleitungsadern a, b ein entsprechendes Erdschlusssignal ETN zu erzeugen.

Zur Speisung der Teilnehmerleitung ist deren Ader a über den Anschluss A und einen Messwiderstand an eine Stromquelle 16 angeschlossen, die ihrerseits über einen Widerstand 18 von geringem Widerstandswert an den negativen Pol 20 einer nicht dargestellten Speisespannungsquelle angeschlossen ist. Der andere Pol 22 der Speisespannungsquelle ist geerdet, liefert also 0 V. Die Speisespannung beträgt —60 V. Die Teilnehmerleitungsader b ist über den Anschluss B an eine Stromquelle 16' angeschlossen, die ihrerseits über einen Widerstand 18', dessen Widerstandswert demjenigen des Widerstands 18 gleicht, an den an Erde liegenden Pol 22 der Speisespannungsquelle angeschlossen ist.

Die Schaltungsanordnung ist weitgehend symmetrisch bezüglich der halben Speisespannung (—30 V) aufgebaut; symmetrisch zueinander ausgebildete und angeordnete Schaltungselemente und Schaltungsteile wie beispielsweise die Stromquellen 16, 16' sind mit Bezugszeichen versehen, die im einen Fall aus einer Zahl und im anderen Fall aus derselben, jedoch mit einem Strich versehenen Zahl gebildet sind.

Die Stromquellen 16, 16' führen bei Abwesenheit von Signalen zwischen dem an Erde liegenden Anschluss 24 und dem Anschluss 26 des Eingangs C untereinander gleich grosse, einander entgegengerichtete Gleichströme. Diese sind am Eingang C modulierbar, so dass ankommende Signale auf die Teilnehmerleitung übertragen werden. Die auf der Teilnehmerleitung anstehenden Signale werden andererseits über einen Operationsverstärker 28 und einen an dessen Ausgang angeschlossenen Kondensator 30 zum Anschluss 32 des Ausgangs D übertragen, dessen anderer Anschluss 34 an Erde liegt. Damit nun die vom Eingang C kommenden und auf die Teilnehmerleitung übertragenen Signale nicht über den Verstärker 28 zum Ausgang D gelangen und dort abgegeben werden können, ist der Verstärker 28 an seinem ersten, invertierenden Eingang 36 mit einem dem Wechselanteil des über die Teilnehmerleitungsadern a, b fliessenden Stroms proportionalen Signal und an seinem zweiten, nicht invertierenden Eingang 38 mit den ankommenden Signalen beaufschlagt, wodurch eine Kompensation derart erfolgt, dass die abgehenden Signale nicht die ankommenden Signale enthalten. Zur Beaufschlagung mit den ankommenden Signalen ist der Eingang 38 unmittelbar mit dem Anschluss 26 des Eingangs C verbunden. Zur Erzielung einer proportionalen Verstärkung liegt zwischen dem Ausgang des Operationsverstärkers 28 und dessen erstem, invertierenden Eingang 36 ein Widerstand 40. Der eine ausschliesslich wechselspannungsmässige Kopplung bewirkende Kondensator 30 verhindert, dass eine etwaige Drift des Ausgangssignals des Verstärkers 28 zum Ausgang D übertragen wird.

Zur Übertragung der auf der Teilnehmerleitung ankommenden Signale, d.h. des Wechselanteils des über die Teilnehmerleitungsadern a, b fliessenden Stroms, ist der erste Eingang 36 des Verstärkers 28 über die Reihenschaltung der Hauptstromstrecken zweier Transistoren 42, 42' gespeist, die vom Potential jeweils einer Teilnehmerleitungsader a, b gesteuert sind. Der Transistor 42 ist ein pnp-Transistor, der Transistor 42' ein npn-Transistor. Zwischen ihre Emitter ist ein Widerstand 44 geschaltet. Das dem Verstärker 28 abgewandte Ende der aus der Hauptstromstrecke des Transistors 42', des Widerstands 44 und der Hauptstromstrecke des Transistors 42 gebildeten Reihenschaltung liegt am Pol 20 der Speisespannung. Grundsätzlich können die Basen der Transistoren 42, 42' unmittelbar an die Adern a, b angeschlossen sein. Zweckmässig liegen die Basen jedoch wie beim Ausführungsbeispiel zur Einstellung des Arbeitspunktes an gegenüber der halben Speisespannung symmetrischen Gleichspannungen, während zur Zuführung der Wechselspannungsanteile des Teilnehmerleitungsstromes die Basen über jeweils einen Kondensator 46, 46' an die Adern a, b angeschlossen sind. Der Kondensator 46 ist dabei, genauer gesagt, an den Verbindungspunkt des Messwiderstands 14 und der Stromquelle 16 angeschlossen.

Zur Erzeugung der Vorspannungs-Gleichspannungen der Transistoren 42, 42' liegt an der Speisespannungsquelle ein von der Reihenschaltung eines Widerstands 48, einer Zenerdiode 50 und eines weiteren Widerstands 48' gebildeter Spannungsteiler, und die Steuerelektroden der Transistoren 42, 42' sind über je einen Vorwiderstand 52, 52' mit jeweils einem Anschluss der Zenerdiode 50 verbunden. Beim Ausführungsbeispiel hat die Zenerdiode 50 eine Zenerspannung von 3,9 V, die Widerstände 48, 48' haben Widerstandswerte von 33 kOhm, und die Widerstandswerte der Vorwiderstände 52, 52' betragen jeweils 40,2 kOhm.

Zur Leistungsversorgung des Operationsverstärkers 28 sowie weiterer, noch zu beschreibender Operationsverstärker der Schaltungsanordnung sind diese an eine gegenüber der Speisespannung niedrigere, bezüglich der halben Speisespannung symmetrische Versorgungsspannung V +, V — angeschlossen. Zur Erzeugung dieser Versorgungsspannung liegt an der Speisespannungsquelle ein von der Reihenschaltung eines Widerstands 54, einer Zenerdiode 56 und eines weiteren Widerstands 54' gebildeter Spannungsteiler, und zwei mit ihren Emittern je einen Pol V— bzw. V + der Versorgungsspannung bildende bipolare Transistoren 58, 58' von entgegengesetztem Leitfähigkeitstyp sind mit ihren Kollektoren an jeweils einen Pol 20 bzw. 22 der Speisespannungsquelle und mit ihren Basen an je einen Anschluss der Zenerdiode 56 angeschlossen. Die Verbindung zwischen der so gebildeten Versorgungsspannungsquelle und allen Operationsverstärkern ist zur besseren Übersichtlichkeit nicht eingezeichnet.

Die ankommenden und auf die Teilnehmerleitung übertragenen Signale erfahren dort wegen des nicht rein ohmschen Verhaltens der Teilnehmerleitung eine frequenzabhängige Pegelverzerrung. Daher wäre ohne besondere Massnahmen an den Eingängen 36, 38 des Verstärkers 28 keine vollständige Kompensation der ankommenden Signale mit deren über die Transistoren 42, 42' zugeführter Abbildung möglich. Um eine vollständige Kompensation zu erreichen und überdies auch die ankommenden Signale möglichst verzerrungsfrei zum Teilnehmer zu leiten, erfolgt die Übertragung der ankommenden Signale zu den Stromquellen 16, 16' über eine eine Pegelentzerrung bewirkende passive Impedanz 60. Bevor deren Wirkung beschrieben wird, sei zunächst die Modulierung der Stromquellen 16, 16' durch die ankommenden Signale erläutert.

Die ankommenden Signale beaufschlagen über den Anschluss 26 und einen Widerstand 62 den invertierenden Eingang eines Operationsverstärkers 64, der mittels eines Widerstands 66 vom dem Widerstand 62 gleichem Widerstandswert rückgekoppelt ist und dessen nicht invertierender Eingang geerdet ist. Zwischen den Ausgang des somit als Umkehrverstärker wirkenden Operationsverstärkers 64 und den invertierenden Eingang eines weiteren als Umkehrverstärker mit einem Widerstand 68 beschalteten Operationsverstärkers 70 ist die Impedanz 60 geschaltet. Der Ausgang des Operationsverstärkers 70 beaufschlagt über einen Kondensator 72 den Eingang einer von Transistoren 74, 76 und einem Widerstand 78 gebildeten Darlingtonstufe. Letztere liegt mit der Hauptstromstrecke ihres Ausgangstransistors 76 in einem veränderlichen, an die Speisespannung angeschlossenen Spannungsteiler, der einen an den Pol 20 angeschlossenen Widerstand 80, die Darlingtonstufe, einen Widerstand 82 und einen an den Pol 22 angeschlossenen Widerstand 80' umfasst. Der Eingangstransistor 74 ist über einen Widerstand 84 mit einer zur Einstellung des Arbeitspunktes dienenden, gegenüber der Speisespannung geringeren Vorspannung von —12 V an einem Anschluss 86 beaufschlagt. Bei einem über den Kondensator 72 zugeführten Eingangssignal und sich dementsprechend ändernden Leitfähigkeit des Transistors 76 ändern sich die an den Widerständen 80, 80' anfallenden Spannungen gegensinnig. Mit ihnen sind über Widerstände 88, 88' die als Komplementär-Darlingtonstufen ausgebildeten Stromquellen 16, 16' gesteuert. Sie weisen jeweils einen zwischen dem Anschluss A bzw. B und dem Widerstand 18 bzw. 18' liegenden Leistungstransistor 90 bzw. 90', einen zum Leistungstransistor 90, 90' komplementären Eingangstransistor 92, 92', dessen Emitter mit dem Verbindungspunkt des Leistungstransistors 90, 90' und des zugeordneten Widerstands 18, 18' und dessen Kollektor mit der Basis des Leistungstransistors 90, 90' verbunden ist, sowie einen zwischen die Basis und den Emitter des Leistungstransistors 90, 90' geschalteten Widerstand 94, 94' auf.

Die durch die Stromquellen 16, 16' fliessenden Ströme sind jeweils so gross, dass die am Widerstand 18 bzw. 18' abfallende Spannung zuzüglich der Diffusionsspannung des Eingangstransistors 92 bzw. 92' der am Widerstand 80 bzw. 80' abfallenden Steuerspannung gleicht. Zur Erzielung einer Stromsymmetrie ist daher abgesehen von möglichst genau gleichen Widerstandswerten 18, 18' eine Gleichheit der Diffusionsspannungen der Eingangstransistoren 92, 92' zweckmässig. Dagegen hat auf die Stromsymmetrie — anders als bei üblichen Darlingtonschaltungen — bei den gewählten Komplementär-Darlingtonstufen die Diffusionsnspannung des Leistungstransistors 90 keinen Einfluss. Dies ist um so wichtiger, als sich gerade bei den Leistungstransistoren 90, 90' aufgrund deren gegenüber den Eingangstransistoren 92, 92' grösseren Verlustleistungen durch entsprechenden Temperaturwechsel relativ grosse Änderungen der Diffusionsspannungen ergeben können.

Der Teilnehmerapparat hat, wie bereits erwähnt, für Niederfrequenzsignale eine nicht rein ohmsche Impedanz. Zur Anpassung ist zweckmässig zwischen die Teilnehmerleitungsanschlüsse A, B eine gleich grosse Impedanz geschaltet, was auch beim Ausführungsbeispiel der Fall ist, weswegen diese vor einer Erläuterung der Pegelentzerrung zunächst betrachtet sei. Die Anpassungsimpedanz 96 besteht aus einem Widerstand 98 von 220 Ohm und einer damit in Reihe liegenden Parallelschaltung eines weiteren Widerstands 100 von 1,2 kOhm mit einem Kondensator 102 von 120 nF. Diese Anpassungsimpedanz 96 ist mittels eines Umschalters 104 und eines relativ grossen Kondensators 106 von 47 uF zwischen den Anschluss E und den Verbindungspunkt des Messwiderstands 14 mit der Stromquelle 16 schaltbar.

Die der Pegelentzerrung dienende Impedanz 60 weist nun einen der Anpassungsimpedanz 96 und damit der Impedanz des Teilnehmerapparats entsprechenden Aufbau und einen entsprechenden, jedoch im Hinblick auf die erfolgende Verstärkung transformierten Impedanzwert auf. Sie besteht aus einem Widerstand 108 und der damit in Reihe geschalteten Parallelschaltung eines weiteren Widerstands 110 und eines Kondensators 112. Der Widerstandswert des Widerstands 108 ist 100fach grösser als derjenige des Widerstands 98, beträgt also 22 kOhm. Der Widerstandswert des Widerstands 110 ist ebenfalls 100fach grösser als derjenige des Widerstands 100, beträgt also 120 kOhm. Die Kapazität des Kondensators 112 ist um denselben, jedoch nunmehr als Divisor verwendeten Faktor kleiner als diejenige des Kondensators 102, beträgt also 1,2 nF. Hierdurch wird praktisch eine vollständige Pegelentzerrung und damit eine möglichst vollständige Kompensation für eine mittlere Leistung am Verstärker 28 erzielt, so dass im gesamten übertragbaren Niederfrequenzbereich die ankommenden Signale nur stark gedämpft zum Ausgang D gelangen können.

Soweit die Schaltungsanordnung vorstehend hinsichtlich der Übertragung von Signalen von der Teilnehmerleitung zum Ausgang D und hinsichtlich der Vermeidung einer Übertragung von Signalen vom Eingang C zum Ausgang D beschrieben wurde, sind selbstverständlich auch Abwandlungen möglich. So könnten beispielsweise anstelle der bipolaren Transistoren 42, 42' Feldeffekttransistoren vorgesehen sein. Sofern deren Hauptstromstrecke eine Vorzugsleitrichtung aufweist, sollten auch sie von komplementärem Leitfähigkeitstyp sein. Weiter ist auch eine zusätzliche Verstärkung der abgehenden Signale möglich, wenn auch die beschriebene Schaltung nur mit einem einzigen Operationsverstärker 28 und den Transistoren 42, 42' den Vorzug besonders grosser Einfachheit aufweist.

Wenn auch die Transistoren 42, 42' infolge ihrer Ankopplung über die Kondensatoren 46, 46' gegen eventuell auftretende Unsymmetrien der Teilnehmerleitung weitgehend unempfindlich sind, so könnten trotzdem kurzfristige Symmetrieschwankungen zu einer Beeinflussung der Transistoren 42, 42' führen. Ohnehin ist es in jedem Falle zweckmässig, Mittel zur genauen Symmetrierung vorzusehen. Solche Mittel seien im folgenden beschrieben.

Zwischen dem Verbindungspunkt der Stromquelle 16 mit dem Widerstand 18 einerseits und dem Verbindungspunkt der Stromquelle 16' mit dem Widerstand 18' andererseits ist eine Widerstandsschaltung 114 eingeschaltet, über die ein gegenüber dem über die Teilnehmerleitung fliessenden Gleichstrom geringer Gleichstrom fliesst. Letzterer führt an den Widerständen 18, 18' zu einem Spannungsabfall. Bei einer Symmetriestörung verändert sich die Verteilung des über die Widerstandsschaltung 114 fliessenden Stroms, wodurch der Symmetriestörung entgegengewirkt wird.

Zusätzlich zu der vorbeschriebenen passiven Symmetrierungswirkung der Widerstandsschaltung 114 bildet letztere einen Teil einer symmetrierend wirkenden Regelschaltung, die im folgenden beschrieben sei.

An der Speisespannungsquelle liegt ein von Widerständen 116, 116' von untereinander gleichem Widerstandswert gebildeter Spannungsteiler, an dessen Abgriff 118 somit eine Referenzspannung zur Verfügung steht, die der halben Speisespannung gleicht. Zwischen den den Teilnehmerleitungsadern a, b zugewandten Anschlüssen der Stromquellen 16, 16', nämlich zwischen den Emittern von deren Leistungstransistoren 90, 90', liegt ein weiterer symmetrischer Spannungsteiler, der von Widerständen 120, 120' von untereinander gleichem Widerstandswert gebildet ist. An dessen Abgriff 122 ist somit eine Spannung abnehmbar, die bei ungestörter Symmetrie der Teilnehmerleitungsadern a, b ebenfalls der halben Speisespannung gleicht. Die an den Abgriffen 118, 122 gewonnenen Spannungen werden miteinander verglichen, und falls der Vergleich als Ergebnis eine Regelabweichung ergibt, wird in Abhängigkeit hiervon der über die Widerstandsschaltung 114 fliessende Strom verändert. Die Widerstandsschaltung 114 besteht aus zwei zueinander symmetrischen Zweigen, von denen der eine aus der Reihenschaltung eines Widerstands 124 und eines Transistors 126 und der andere aus der Reihenschaltung eines Widerstands 124' und der Hauptstromstrecke eines zum Transistor 126 komplemetären Transistors 126' besteht. Bei einem den Strom über die Widerstandsschaltung 114 verändernden Regeleingriff infolge einer vorliegenden Regelabweichung wird nun der Strom in einen Zweig 124, 126 gegensinnig zu demjenigen im anderen Zweig 124', 126' verändert. Beim Ausführungsbeispiel erfolgt dies mittels eines Operationsverstärkers 128, der mit seinem nicht invertierenden Eingang an den Abgriff 118 und mit seinem invertierenden Eingang an den Abgriff 122 angeschlossen ist, so dass er gleichzeitig als die Regelabweichung bildendes Vergleichsglied wirkt. Zwischen den Ausgang des Operationsverstärkers 128 und seinen invertierenden Eingang ist ein Widerstand 130 geschaltet. Parallel hierzu ist weiter die Reihenschaltung eines weiteren Widerstands 132 und eines Kondensators 134 geschaltet. Der Widerstand 130 ist bei Symmetrieänderungen wirksam, die sich beispielsweise aus Speisespannungsschwankungen ergeben. Sein Widerstandswert wird gross gegenüber den Widerstandswerten der Widerstände 116, 116', 120, 120' und gross gegenüber den Widerstandswerten der Zweige 124, 126; 124', 126' gewählt; beim Ausführungsbeispiel beträgt er 1 MOhm. Der aus dem Widerstand 132 und dem Kondensator 134 gebildete Rückführungszweig dient zur dynamischen Dämpfung von Unsymmetrien beim Übertragen ankommender Signale zur Teilnehmerleitung. Dabei muss bei der Wahl der Werte des Widerstands 132 und des Kondensators 134 ein Kompromiss zwischen einer grossen Unsymmetriedämpfung, die mindestens 56 dB und zweckmässig mehr als 60 dB beträgt, und einer guten Sendedämpfung von grösser 30 dB angestrebt werden. Als zweckmässige Werte für den Widerstandswert des Widerstands 132 und die Kapazität des Kondensators 134 haben sich 56 kOhm bzw. 100 nF erwiesen.

Die Zweige der Widerstandsschaltung 114 könnten grundsätzlich ausschliesslich aus ohmschen Widerständen bestehen. Die in die Zweige eingeschalteten Transistoren 126, 126' sind mittels zur halben Speisespannung symmetrischer, aus der Speisespannung gewonnener Steuerspannungen, nämlich mittels der Potentiale V+, V— der Versorgungsspannung der Operationsverstärker, auf einen jeweiligen Arbeitspunkt eingestellt. Hierdurch wird der Vorteil erreicht, dass bei Schwankungen der Speisespannung die Leitfähigkeiten der Transistoren 126, 126' gegensinnig geändert werden, wodurch einer Störung der Teilnehmerleitung durch Spannungsschwankungen der Versorgung entgegengewirkt wird.

Die vorstehend beschriebene Symmetrieregelschaltung hat die Eigenschaft, dass sowohl bei einer Erdung der Teilnehmerleitungsader a als auch bei einer Erdung der Teilnehmerleitungsader b der invertierende Eingang des Operationsverstärkers 128 stärker positiv wird als dessen nicht invertierender Eingang und dass somit der Operationsverstärker 120 ein stärker negativ werdendes Ausgangssignal erzeugt. Diese Eigenschaft kann zu einer sehr einfachen Erkennung von Erdschlüssen ausgenutzt werden, ohne dass getrennte, jeweils einer Teilnehmerleitungsader a, b zugeordnete Schaltungen wie beim Stand der Technik erforderlich wären. Zur Erzeugung eines Erdschlusssignals ist der Ausgang des Operationsverstärkers 128 und damit der Mittelpunkt der Widerstandsschaltung 114 über einen Widerstand 1136 mit der Basis eines Transistors 138 verbunden. Dessen Kolletor liegt über Widerstände 140, 142 an einer Klemme mit einer geringen positiven Spannung (+ 5 V), während der Ermitter des Transistors 138 über eine Zenerdiode 146 mit einem vorgegebenen, gegenüber der halben Speisespannung stärker negativen Potential verbunden ist, nämlich beim Ausführungsbeispiel mit dem negativen Potential V— der Versorgungsspannung für die Operationsverstärker. Der Transistor 138 ist im Normalzustand leitend. Sinkt dagegen im Falle eines Erdschlusses die Ausgangsspannung des Operationsverstärkers 128 wegen dessen dann auftretender Übersteuerung annähernd auf das Potential V— ab, so wird der Transistor 138 gesperrt. Mit der bei leitendem Transistor 138 am Widerstand 142 abfallenden Spannung ist der über einen Kondensator 148 wechselspannungsmässig geerdete, invertierende Eingang eines Operationsverstärkers 150 beaufschlagt. Zwischen die Klemme 144 und Erde ist ein von Widerständen 152, 154 gebildeter Spannungsteiler geschaltet, an dessen Abgriff der nicht invertierende Eingang des Operationsverstärkers 150 angeschlossen ist, um diesem eine Spannung zuzuführen, die bei leitendem Transistor 138 gleich der am invertierenden Eingang liegenden Spannung ist. Wird nun infolge eines Erdschlusses der Transistor 138 nichtleitend und wird infolgedessen der invertierende Eingang mit der positiven Spannung der Klemme 144 beaufschlagt, so erzeugt der Operationsverstärker ein den Erdschluss anzeigendes Ausgangssignal ETN.

Zur Speisung des Weckers des Teilnehmerapparats mit einer Rufwechselspannung steht an einer Klemme 156 eine Wechselspannung von 60 V zur Verfügung. Diese kann über einen zur Kurzschlusssicherung dienenden Widerstand 158 mit positivem Temperaturkoeffizienten und einen damit in Reihe liegenden Widerstand 160 und über einen von Kontakten eines Umschaltrelais gebildeten Umschalter 162 auf die Teilnehmerleitungsader b gegeben werden; bei Betätigung des Umschalters 162 wird die Stromquelle 16' von der Ader b abgetrennt. Die der Klemme 156 abgewandte Seite der Rufspannungsquelle ist an Erde gelegt. Damit der Rufwechselstrom von der Teilnehmerleitungsader a zur Erde fliessen kann, ist der Umschalter 104 vorgesehen, der zwischen dem Kondensator 106 und der Anpassungsimpedanz 96 liegt und in betätigtem Zustand anstelle der Anpassungsimpedanz 96 die Erde mit einem Belag des Kondensators 106 verbindet. Letzterer hat somit die doppelte Aufgabe, die Anpassungsimpedanz 96 wechselstrommässig zwischen die Anschlüsse A, B zu schalten und bei einem Ruf den Rufwechselstrom zu führen.

Die Schaltungsanordnung hat auch die Aufgabe, den in der Teilnehmerleitung fliessenden Gleichstrom zu erfassen. Hierzu wird üblicherweise die an einer Stromquelle 16 oder 16' abfallende Spannung erfasst. Diese Spannung wird jedoch durch in der Schaltungsanordnung vorhandene Kapazitäten verfälscht, insbesondere durch den Kondensator 106. Hierdurch erhalten bei einer Erfassung von Stromänderungen über die Spannung an einem Stromgenerator beispielsweise bei Verwendung eines Teilnehmerapparats mit Wählscheibe die Wählimpulse derartig abgeschwächte und zudem unterschiedliche Vorder- und Rückflanken, dass eine sichere Auswertung nicht mehr gewährleistet ist. Diese Schwierigkeiten werden bei der vorliegenden Schaltungsanordnung vermieden, indem zur Erfassung des in der Teilnehmerleitung fliessenden Stroms in dessen eine Ader — beim Ausführungsbeispiel in der Ader a — der Messwiderstand eingeschaltet ist und die an ihm abfallende Spannung ausgewertet wird. Der Messwiderstand 14 ist von einem relativ grossen Kondensator 164 überbrückt, der einen teilweisen Kurzschluss für den Rufwechselstrom darstellt, dessen Kapazität jedoch zusammen mit dem geringen Widerstandswert des Messwiderstands 14 eine nur geringe Zeitkonstante bildet, so dass beispielsweise Wählimpulse praktisch unverzerrt erfasst werden können. Der Kondensator 106 ist mit seinem dem Umschalter 104 abgewandten Belag an den Verbindungspunkt des Messwiderstands 14 und der Stromquelle 16 angeschlossen. Zur Auswertung der am Messwiderstand 14 abfallenden Spannung und zur Erzielung einer Potentialtrennung ist die Verwendung eines Optokopplers 166 zweckmässig, dessen Senderdiode 168 parallel zum Messwiderstand 14 geschaltet ist. Die Empfängerdiode 170 des Optokopplers 166 liegt beim Ausführungsbeispiel in Reihe mit einem Arbeitswiderstand 172 zwischen der Klemme 144 und Erde und damit an einer relativ geringen Spannung, und am Verbindungspunkt zwischen der Empfängerdiode 170 und dem Widerstand 172 ist eine dem Teilnehmerleitungsstrom proportionale Spannung SSTR abgenommen.

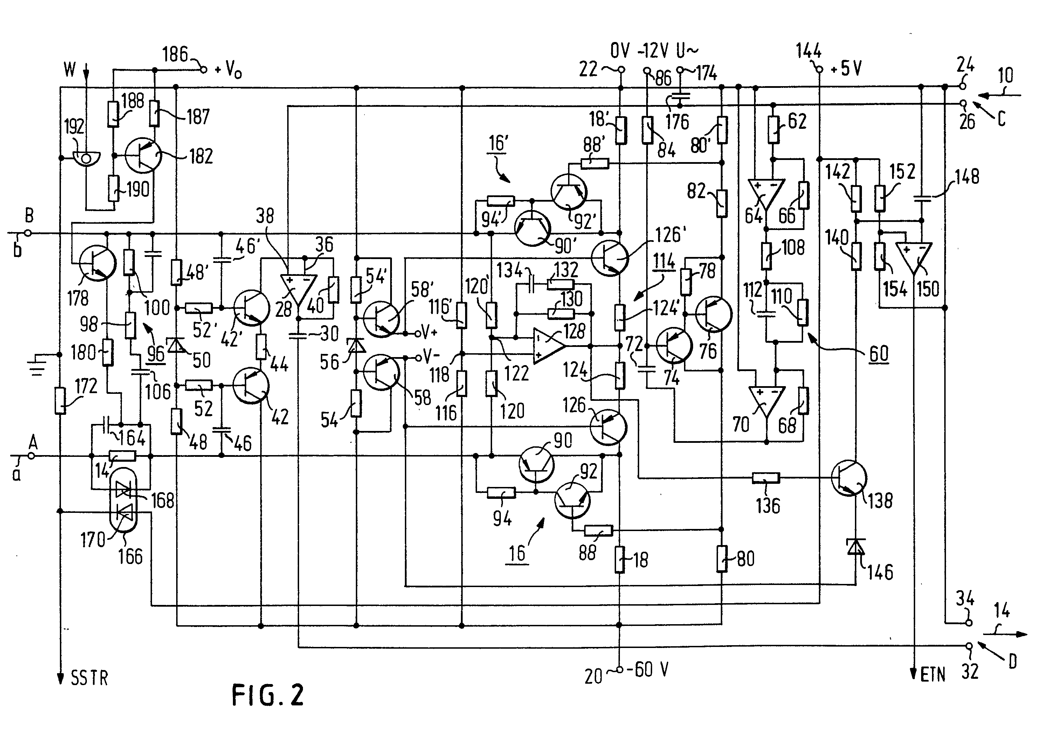

Das in Fig. 2 dargestellte Ausführungsbeispiel stimmt mit demjenigen nach Fig. 1 weitgehend überein; gleiche Teile sind mit gleichen Bezugszeichen bezeichnet. Ein Unterschied gegenüber dem Ausführungsbeispiel nach Fig. 1 besteht jedoch darin, dass eine Rufwechselspannung zum Teilnehmerwecker übertragen wird. Dies erfolgt im wesentlichen dadurch, dass am Eingang C anstelle eines Niederfrequenzsprachsignals eine Wechselspannung als Steuerspannung zugeführt wird, mittels derer die über die Stromquellen 16, 16' fliessenden Ströme entsprechend moduliert werden. Es genügt daher eine relativ geringe Wechselspannung als Steuerspannung. Diese Wechselspannung U wird beim Ausführungsbeispiel über eine Klemme 174 und einen Kondensator 176 dem Anschluss 26 des Eingangs C zugeführt. Hierdurch können die Teile 105 und 156 bis 162 in Fig. 1 entfallen. Andererseits ist jedoch bei der Zuführung der Rufwechselspannung eine gleichstrommässige Verbindung zwischen den Anschlüssen A, B erforderlich, da die Stromquellen 16, 16' weiterhin einen Gleichstrom als Mittelwert erzeugen müssen, dem der Rufwechselstrom überlagert ist. Zur Herstellung dieser Gleichstromverbindung dient die Reihenschaltung eines Transistors 178 und eines Widerstands 180, die zwischen den Anschluss B und den Verbindungspunkt des Messwiderstands 14 und der Stromquelle 16 geschaltet sind. Die Ansteuerung des Transistors 178 erfolgt über die seiner Basis vorgeschaltete Hauptstromstrecke eines weiteren Transistors 182, der in Reihe mit einem Lastwiderstand 184 an einen Anschluss 186 angeschlossen ist, der an einer geeigneten Spannung +V₀ liegt. Letztere speist auch die Reihenschaltung eines Widerstands 188, eines weiteren Widerstands 190 und eines elektronischen Schalters 192, der bei Zuführung der Wechselspannung U mittels eines Gleichspannungssignals W angesteuert wird. Die dann am Widerstand 188 abfallende Teilspannung macht den mit seiner Basis an den Verbindungspunkt der Widerstände 188, 190 angeschlossenen Transistor 182 leitend, der seinerseits den Transistor 178 leitend steuert.

Der besondere Vorteil der Rufspannungsübertragung gemäss Fig. 2 liegt in der hier auch hinsichtlich der Rufwechselspannung beibehaltenen Symmetrierung, wodurch die Übertragung der Rufwechselspannung von der Teilnehmerleitung auf benachbarte Leitungen praktisch ausgeschlossen ist, während bei der herkömmlichen unsymmetrischen Übertragung der Rufwechselspannung, wie sie auch in Fig. 1 erfolgt, eine Beeinflussung von Nachbarleitungen nur mit grossem sonstigen Aufwand vermieden werden kann.

Insgesamt zeichnen sich beide beschriebene Ausführungsformen durch eine hohe Unterdrückung von Versorgungsspannungsschwankungen, durch eine Frequenzunabhängigkeit des Eingangswiderstands und der Gabelübertragungsdämpfung, durch einen von der Leitungslänge unabhängigen Schleifstrom, durch Kurzschlussfestigkeit auch gegenüber dem negativen Speisespannungsanschluss, durch hohe Unterdrückung von Längsspannungen und durch eine hohe Frequenzkonstanz des Sendepegels neben den bereits vorstehend erläuterten Vorteilen aus.

**Patentansprüche**

1. Schaltungsanordnung zum zweidrähtigen Anschluss eines Fernsprechteilnehmers an je eine Leitung für abgehende und ankommende Signale (10; 12), mit zwei an jeweils eine Teilnehmerleitungsader (a; b) angeschlossenen, von den ankommenden Signalen steuerbaren, zur Leistungsversorgung an jeweils einen Pol einer Speisespannungsquelle (20; 22) angeschlossenen Stromquellen (16; 16') und einem die abgehenden Signale abgebenden, zwei Eingänge aufweisenden Verstärker (28) dessen erster Eingang (36) mit einem dem Wechselanteil des über die Teilnehmerleitung fliessenden Stroms proportionalen Signal beaufschlagt wird und über ein elektronisches, vom Potential einer Teilnehmerleitungsader gesteuertes Bauelement gespeist ist und dessen zweiter Eingang (38) vom ankommenden Signal beaufschlagt wird, dadurch gekennzeichnet, dass der erste Eingang (36) des die abgehenden Signale abgebenden Verstärkers (28) über die Reihenschaltung der Hauptstromstrecken zweier Transistoren (42; 42'), von entgegengesetztem Leitfähigkeitstyp gespeist ist, deren Steuerelektroden über jeweils einen Kondensator (46; 46') unmittelbar an eine Teilnehmerleitungsader (a, b) angeschlossen sind, dass zwischen die in Reihe geschalteten Hauptstromstrecken ein ohmscher Widerstand (44) geschaltet ist, dass zur Erzeugung der Vorspannungs-Gleichspannungen an der Speisespannungsquelle ein von der Reihenschaltung eines Widerstands (48), einer Zenerdiode (50) und eines weiteren Widerstands (48') gebildeter erster Spannungsteiler liegt und dass die Steuerelektroden der Transistoren (42; 42') über je einen Vorwiderstand (52; 52') mit jeweils einem Anschluss der Zenerdiode (50) dieses ersten Spannungsteilers verbunden sind.

2. Schaltungsanordnung nach Anspruch 1, wobei der Verstärker ein Operationsverstärker (28) ist, dadurch gekennzeichnet, dass der Operationsverstärker (28) mit einer bezüglich der halben Speisespannung symmetrischen Versorgungsspannung (V +; V—) gespeist ist und dass der dem Operationsverstärker (28) abgewandte Anschluss der Reihenschaltung (42; 44; 42') an einen Pol (20) der Speisespannungsquelle angeschlossen ist.

3. Schaltungsanordnung nach Anspruch 2, dadurch gekennzeichnet, dass zur Erzeugung der Versorgungsspannung (V +; V—) des Operationsverstärkers (28) an der Spannungsquelle ein von der Reihenschaltung eines Widerstands (54), einer Zenerdiode (56) und eines weiteren Widerstands (54') gebildeter zweiter Spannungsteiler liegt und dass zwei mit ihren Emittern je einen Pol der Versorgungsspannung (V +; V—) des Operationsverstärkers (28) bildende komplementäre Transistoren (58; 58') mit ihren Kollektoren an jeweils einen Pol (20; 22) der Speisespannungsquelle und mit ihren Basen an je einen Anschluss der genannten Zenerdiode (56) angeschlossen sind.

4. Schaltungsanordnung nach einem der vorangehenden Ansprüche, dadurch gekennzeichnet, dass der Verstärker (28) mit dem die abgehenden Signale führenden Ausgang (D) mittels eines Kondensators (30) ausschliesslich wechselspannungsmässig gekoppelt ist.

5. Schaltungsanordnung nach einem der vorangehenden Ansprüche, dadurch gekennzeichnet, dass der zweite Eingang (38) des Verstärkers (28) mit dem mit den ankommenden Signalen beaufschlagten Eingang (C) unmittelbar verbunden ist.

6. Schaltungsanordnung nach einem der vorangehenden Ansprüche, dadurch gekennzeichnet, dass die Übertragung der ankommenden Signale zu den Stromquellen (16; 16') über eine eine Pegelentzerrung bewirkende passive Impedanz (60) erfolgt, die vorzugsweise aus einem Widerstand (108) und einer mit diesem in Reihe geschalteten Parallelschaltung eines weiteren Widerstands (110) und eines Kondensators (112) besteht und dass die Widerstandswerte der Widerstände (108; 110) vorzugsweise um annähernd den Faktor 100 grösser sind als die entsprechenden Widerstandswerte der vom Teilnehmerapparat gebildeten Teilnehmerimpedanz und dass der Kapazitätswert des Kondensators (112) vorzugsweise durch den gleichen Faktor dividiert geringer ist als die entsprechende Kapazität der Teilnehmerimpedanz.

7. Schaltungsanordnung nach einem der vorangehenden Ansprüche, dadurch gekennzeichnet, dass die Stromquellen (16; 16') von Komplementär-Darlingtonstufen (90; 92; 94; 90'; 92'; 94') gebildet sind, deren Steuereingänge jeweils über gleich grosse Widerstände (80; 80') mit den jeweils zugehörigen Speisespannungspolen (20; 22) verbunden sind, wobei sich in Reihe zwischen den Widerständen (80; 80') ein Verstärker (74; 76; 78; 82) befindet, der mit einer Bezugsspannung (—12 V) und dem vorzugsweise entzerrten ankommenden Signal beaufschlagt ist.

8. Schaltungsanordnung nach einem der vorangehenden Ansprüche, dadurch gekennzeichnet, dass zwischen den Stromquellen (16; 16') und dem zugeordneten Pol (20; 22) der Speisespannungsquelle jeweils ein vom Teilnehmerleitungsstrom durchflossener Widerstand (18; 18') liegt und dass zur Symmetrierung der Teilnehmerleitung zwischen den beiden Verbindungspunkten Stromquellen (16; 16') mit diesen Widerständen (18; 18') eine vorzugsweise aus zwei symmetrischen Zweigen bestehende Widerstandsschaltung (114) liegt und dass zwischen die Teilnehmerleitungsadern (a; b) ein symmetrischer Spannungsteiler (120; 120') geschaltet ist und dass ein Regler (128 bis 134) vorgesehen ist, der in Abhängigkeit von einem Vergleich der Spannung am Abgriff (122) dieses Spannungsteilers (120; 120') mit der halben Speisespannung die Spannung am Verbindungspunkt der Zweige (124; 126; 124'; 126') der Widerstandsschaltung (114) steuert.

9. Schaltungsanordnung nach Anspruch 8, dadurch gekennzeichnet, dass der Regler von einem Operationsverstärker (128) gebildet ist, zwischen dessen Ausgang und dessen invertierenden Eingang ein Widerstand (130) und parallel zu diesem die Reihenschaltung eines weiteren Widerstands (132) und eines Kondensators (134) liegt.

10. Schaltungsanordnung nach Anspruch 8 oder 9, dadurch gekennzeichnet, dass in die Zweige (124; 126; 124'; 126') der Widerstandsschaltung (114) jeweils ein Transistor (126; 126') eingeschaltet ist und dass diese komplementär ausgebildeten Transistoren (126; 126') mittels zur halben Speisespannung symmetrischer, aus der Speisespannung gewonnener Steuerspannungen gesteuert sind.

11. Schaltungsanordung nach einem der Ansprüche 9 oder 10, dadurch gekennzeichnet, dass zur Überwachung beider Teilnehmerleitungsadern (a; b) auf Erdschluss die Ausgangsspannung des Reglers (128) mit einer vorgegebenen Spannung verglichen und bei einer einem Schwellenwert entsprechenden Abweichung ein den Erdschluss bezeichnendes Signal (ETN) erzeugt wird.

12. Schaltungsanordnung nach einem der vorangehenden Ansprüche, dadurch gekennzeichnet, dass zwischen den Anschlüssen (A; B) der Teilnehmerleitung eine die Teilnehmerimpedanz nachbildende Anpassungsimpedanz (69) liegt.

13. Schaltungsanordnung nach einem der vorangehenden Ansprüche, dadurch gekennzeichnet, dass zur Speisung des Teilnehmerweckers mit einer Rufwechselspannung die eine Ader (b) der Teilnehmerleitung mittels eines Umschalters (162) anstelle mit einer Stromquelle (16') mit einem Pol (156) einer andererseits an Erde liegenden Rufwechselspannungsquelle verbindbar ist und dass mittels eines gleichzeitig mit dem Umschalter (162) betätigbaren Umschalters (104) die andere Ader (a) über einen Kondensator (106) mit Erde verbindbar ist und, dass in der anderen Schaltstellung der Umschalter (104) den Kondensator (106) mit der Anpassungsimpedanz (96) und Erde verbindet.

14. Schaltungsanordnung nach einem der vorangehenden Ansprüche, dadurch gekennzeichnet, dass zur Erfassung des in der Teilnehmerleitung fliessenden Stroms in deren eine Ader (a) ein Messwiderstand (14) eingeschaltet ist, der vorzugsweise von einem als teilweiser Kurzschluss für den Rufwechselstrom wirksamen Kondensator (164) überbrückt ist und dem vorzugsweise die Senderdiode (168) eines Optokopplers (166) parallelgeschaltet ist.

15. Schaltungsanordnung nach Anspruch 13 oder 14, dadurch gekennzeichnet, dass der mit dem Schalter (104) in Reihe geschaltete Kondensator (106) zwischen dem in eine Teilnehmerleitungsader (a) eingeschalteten Messwiderstand (14) und der an dieselbe Ader (a) angeschlossenen Stromquelle (16') an diese Ader (a) angeschlossen ist.

16. Schaltungsanordnung nach einem der vorangehenden Ansprüche, dadurch gekennzeichnet, dass zur Übertragung einer Rufwechselspannung zum Teilnehmerwecker dem Eingang (C) für ankommende Signale eine Wechselspannung (U) als Steuerspannung zugeführt wird und dass gleichzeitig ein vorzugsweise elektronischer Schalter (178) betätigt wird, der einen Widerstand (180) zwischen die Teilnehmerleitungsadern (a; b) schaltet (Fig. 2).

**Claims**

1. A circuit arrangement for the two-wire connection of a telephone subscriber to one line each for outgoing and incoming signals (10; 12), said circuit arrangement comprising: two power sources (16; 16'), said power sources being connected to respective leads (a; b) of a subscriber line wire, being controllable by the incoming signals, and being connected for the supply of power to one pole each of a line voltage source (20; 22); and an amplifier (28) emitting the outgoing signals and having two inputs, the first input (36) being impinged by a signal proportional to the alternating component of a current flowing over the subscriber line wire and being supplied by way of an electronic component controlled by the potential of one subscriber line wire lead, the second input (38) being impinged by the incoming signal, characterized in that the first input (36) of said amplifier (28) emitting the outgoing signals is supplied by way of the series connection of the principal current paths of two transistors (42; 42') of opposite conductivity type, the control electrodes of said transistors being directly connected to respective subscriber line wire leads (a; b) via respective capacitors (46; 46'); that an ohmic resistor (44) is interposed between the series-connected principal current paths; that, for producing the biasing direct voltages, a first voltage divider formed by the series connection of a resistor (48), a Zener diode (50) and another resistor (48') is connected to the line voltage source; and that the control electrodes of said transistors (42; 42') are connected by way of one barrier resistor (52, 52') each with one terminal each of the Zener diode (50) of said first voltage divider.

2. A circuit arrangement as claimed in claim 1, wherein the amplifier is an operational amplifier (28), characterized in that said operational amplifier (28) is supplied with a supply voltage (V +; V—) which is symmetrical with respect to half the line voltage, and that that terminal of the series connection (42; 44; 42') which is turned away from the operational amplifier (28) is connected to one pole (20) of said line voltage source.

3. A circuit arrangement as claimed in claim 2, characterized in that, for generating the supply voltage (V +; V—) of said operational amplifier (28), a second voltage divider formed by the series connection of a resistor (54), a Zener diode (56) and another resistor (54') is connected to the voltage source, and that two complementary transistors (58; 58') forming with their emitters one pole each of the supply voltage (V +; V—) of said operational amplifier (28) are connected by their collectors to one pole (20; 22) each of the line voltage source and by their bases to one terminal each of said Zener diode (56).

4. A circuit arrangement as claimed in any of the foregoing claims, characterized in that said amplifier (28) is coupled with the output (D) conducting the outgoing signals by way of a capacitor (30) exclusively in the manner of an a.c. voltage coupling.

5. A circuit arrangement as claimed in any of the foregoing claims, characterized in that the second input (38) of said amplifier (28) is connected directly with the input (C) which is impinged by the incoming signals.

6. A circuit arrangement as claimed in any of the foregoing claims, characterized in that the incoming signals are transmitted to the power sources (16; 16') by way of a passive impedance (60) causing a level equalization, said impedance preferably consisting of a resistor (108) and a therewith series-connected parallel circuit of another resistor (110) and a capacitor (112), that the resistance values of the resistors (108; 110) are preferably greater by about a factor of 100 than the corresponding resistance values of the subscriber impedance established by the subscriber set, and that the capacitance value of the capacitor (112) is, when preferably divided by the same factor, lower than the corresponding capacitance of the subscriber impedance.

7. A circuit arrangement as claimed in any of the foregoing claims, characterized in that the power sources (16; 16') are formed by complementary Darlington stages (90; 92; 94; 90'; 92'; 94') with control inputs each being connected to the associated line voltage poles (20; 22) by way of resistors (80; 80') of equal value, an amplifier (74; 76; 78; 82) being provided in series between the resistors (80; 80') and being impinged by a reference voltage (—12 V) and by the preferably equalized incoming signal.

8. A circuit arrangement as claimed in any of the foregoing claims, characterized in that the resistor (18; 18') each through which the subscriber line current flows is provided between the power sources (16; 16') and the associated pole (20; 22) of the line voltage source, that, for balancing the subscriber line, a resistance circuit (114) preferably consisting of two symmetrical branches is provided between the two junctions of the power sources (16; 16') with these resistors (18; 18'), that a symmetrical voltage divider (120; 120') is disposed between the subscriber line wire leads (a; b), and that a controller (128 to 134) is provided which controls the voltage at the junctions of the branches (124; 126; 124'; 126') of the resistance circuit (114) in response to a comparison of the voltage on the tap (122) of this voltage divider (120; 120') with half the line voltage.

9. A circuit arrangement as claimed in claim 8, characterized in that the controller is formed by an operational amplifier (128), a resistor (130) being provided between the output and the inverting input of said operational amplifier, and another resistor (132) and a capacitor (134) being connected in series parallel to said resistor (130).

10. A circuit arrangement as claimed in claim 8 or 9, characterized in that one transistors (126; 126') each is interposed between the branches (124; 126; 124'; 126') of said resistor circuit (114), and that these complementary resistors (126; 126') are controlled by means of control voltages gained from the line voltage and being symmetrical to half the line voltage.

11. A circuit arrangement as claimed in any of claims 9 or 10, characterized in that, for monitoring both subscriber line wire leads (a; b) as to grounding, the output voltage of the controller (128) is compared with a given voltage, and a signal (ETN) designating the grounding is generated when there is a deviation corresponding to a threshold value.

12. A circuit arrangement as claimed in any of the foregoing claims, characterized in that a matching impedance (96) simulating the subscriber impedance is provided between the terminals (A; B) of the subscriber line.

13. A circuit arrangement as claimed in any of the foregoing claims, characterized in that, for supplying the subscriber bell with a ringing a.c. voltage, the one wire lead (b) of the subscriber line is connectable by means of a changeover switch (162) not with a power source (16') but with a pole (156) of a ringing a.c. voltage source which is grounded at the other end, and that by means of a changeover switch (104) which may be actuated at the same time as changeover switch (162) the other wire lead (a) is connectable with the ground by way of a capacitor (106), and that in the other switch position the changeover switch (104) connects the capacitor (106) with the matching impedance (69) and ground.

14. A circuit arrangement as claimed in any of the foregoing claims, characterized in that, for detecting the current flowing in the subscriber line, a measuring resistor (14) is provided in the one wire lead (a) of the subscriber line, said measuring resistor being preferably bypassed by a capacitor (164) acting as a partial short circuit for the ringing alternating current, the transmitting diode (168) of an optical coupler (166) being preferably connected in parallel to said measuring resistor.

15. A circuit arrangement as claimed in claim 13 or 14, characterized in that the capacitor (106) connected in series with the switch (104) is connected to the subscriber line wire lead (a) between the measuring resistor (14) provided in the wire lead (a) and the power source (16) connected to this wire lead (a).

16. A circuit arrangement as claimed in any of the foregoing claims, characterized in that, for transmitting a ringing a.c. voltage to the subscriber bell, an a.c. voltage (U) is fed as a control voltage to the input (C) for incoming signals, and that at the same time a preferably electronic switch (178) is actuated to interpose a resistor (180) between the subscriber line wire leads (a; b) (fig. 2).

**Revendications**

1. Montage permettant à un abonné au téléphone d'être raccordé au moyen de deux fils à une ligne véhiculant respectivement des signaux entrants et sortants (10; 12), le montage comprenant deux sources de courant (16; 16') qui, reliées respectivement à un fil (a; b) de la ligne d'abonné, peuvent être commandées par les signaux entrants et sont raccordées en vue de l'alimentation en énergie respectivement à un pôle (20; 22) d'une source de tension d'alimentation, et un amplificateur (28) délivrant les signaux sortants et présentant deux entrées dont la première entrée (36) reçoit un signal proportionnel à la composante alternative du courant circulant par la ligne d'abonné et est alimentée par l'intermédiaire d'un composant électronique commandé par le potentiel d'un fil de la ligne d'abonné et dont la seconde entrée (38) reçoit le signal entrant, caractérisé en ce que la première entrée (36) de l'amplificateur (28) délivrant les signaux sortants est alimentée par l'intermédiaire du montage en série des circuits de courant principal de deux transistors (42; 42') de types de conductibilité opposés, dont les électrodes de commande sont connectées, respectivement par l'intermédiaire d'un condensateur (46; 46'), directement à un fil (a, b) de la ligne d'abonné, en ce qu'entre les circuits de courant principal montés en série est interposée une résistance ohmique (44), en ce que pour produire les tensions continues de polarisation un premier diviseur de tension constitué par le montage en série d'une résistance (48), d'une diode Zener (50) et d'une autre résistance (48') se trouve connecté à la source de tension d'alimentation et en ce que les électrodes de commande des transistors (42; 42') sont reliés respectivement par une résistance en série (52, 52') à une borne respective de la diode Zener (50) de ce premier diviseur de tension.

2. Montage selon la revendication 1, dans lequel l'amplificateur est un amplificateur opérationnel (28), caractérisé en ce que l'amplificateur opérationnel (28) est alimenté avec une tension (V +; V—) symétrique par rapport à la demi-tension d'alimentation et en ce que la borne du montage en série (42, 44, 42') éloignée de l'amplificateur opérationnel (28) est reliée à un pôle (20) de la source de tension d'alimentation.

3. Montage selon la revendication 2, caractérisé en ce que pour produire la tension d'alimentation (V +; V—) de l'amplificateur opérationnel (28) un second diviseur de tension constitué par le montage en série d'une résistance (54), d'une diode Zener (56) et d'une autre résistance (54') se trouve connecté à la source de tension et en ce que deux transistors complémentaires (58; 58'), qui forment avec leur émetteur respectivement un pôle de la tension d'alimentation (V +; V—) de l'amplificateur opérationnel (28), ont leur collecteur relié respectivement à un pôle (20; 22) de la source de tension d'alimentation et leur base à une borne respective de ladite diode Zener (56).

5. Montage selon l'une quelconque des revendications 1 à 3, caractérisé en ce que grâce à un condensateur (30) l'amplificateur (28) est relié exclusivement en ce qui concerne des tensions alternatives à la sortie (D) véhiculant les signaux sortants.

5. Montage selon l'une quelconque des revendications 1 à 4, caractérisé en ce que la seconde entrée (38) de l'amplificateur (28) est reliée directement à l'entrée (C) recevant les signaux entrants.

6. Montage selon l'une quelconque des revendications 1 à 5, caractérisé en ce que la transmission des signaux entrants aux sources de courant (16; 16') se réalise par l'intermédiaire d'une impédance passive (60) qui produit une correction de distorsion de niveau et est de préférence constituée par une résistance (108) et un montage en parallèle, monté en série avec cette dernière, d'une autre résistance (110) et d'un condensateur (112) et en ce que les valeurs des résistances (108, 110) sont de préférence approximativement 100 fois plus élevées que les valeurs de résistance correspondantes de l'impédance présentée par le poste d'abonné et la capacité du condensateur (112) est de préférence autant de fois plus faible que la capacité correspondante de l'impédance du poste d'abonné.

7. Montage selon l'une quelconque des revendications 1 à 6, caractérisé en ce que les sources de courant (16; 16') sont formées d'étages de Darlington complémentaires (90, 92, 94; 90', 92', 94') dont les entrées de commande sont reliées respectivement par l'intermédiaire de résistances de même valeur (80; 80') aux pôles de tension d'alimentation (20; 22) respectifs, tandis qu'en série avec les résistances (80; 80') se trouve entre celles-ci un amplificateur (74, 76, 78, 82) auquel sont appliqués une tension de référence (—12 V) et le signal entrant ayant de préférence subi une correction de distorsion.

8. Montage selon l'une quelconque des revendications 1 à 7, caractérisé en ce qu'entre les sources de courant (16; 16') et le pôle correspondant (20; 22) de la source de tension d'alimentation se trouve respectivement une résistance (18; 18') parcourue par le courant de la ligne d'abonné, en ce que pour symétriser la ligne d'abonné il se trouve entre les deux points reliant les sources de courant (16; 16') à ces résistances (18; 18') un circuit à résistances (114) composé de préférence de deux branches symétriques, en ce qu'il est monté entre les fils (a; b) de la ligne d'abonné un diviseur de tension symétrique (120; 120') et en ce qu'il est prévu un régulateur (128 à 134) qui, en fonction d'une comparaison de la tension au niveau de la prise (122) du diviseur de tension (120; 120') avec la demi-tension d'alimentation, règle la tension au niveau du point de jonction des branches (124, 126; 124', 126') du circuit à résistances (114).

9. Montage selon la revendication 8, caractérisé en ce que le régulateur est constitué par un amplificateur opérationnel (128) entre la sortie et l'entrée inverseuse duquel se trouvent une résistance (130) et, parallèlement à celle-ci, le montage en série d'une autre résistance (132) et d'un condensateur (134).

10. Montage selon la revendication 8 ou 9, caractérisé en ce que dans les branches (124, 126; 124', 126') du circuit à résistances (114) est monté respectivement un transistor (126; 126') et en ce que ces transistors (126; 126') réalisés de façon à être complémentaires sont commandés au moyen de tensions de commande obtenues à partir de la tension d'alimentation et symétriques par rapport à la demi-tension d'alimentation.

11. Montage selon la revendication 9 ou 10, caractérisé en ce que pour contrôler les deux fils (a; b) de la ligne d'abonné en ce qui concerne des pertes à la terre la tension de sortie du régulateur (128) est comparée avec une tension fixée à l'avance et, dans le cas d'un écart correspondant à une valeur de seuil, un signal (ETN) indiquant la perte à la terre est produit.

12. Montage selon l'une quelconque des revendications 1 à 11, caractérisé en ce qu'entre les bornes (A; B) de la ligne d'abonné se trouve une impédance d'adaptation (96) imitant l'impédance du post d'abonné.

13. Montage selon l'une quelconque des revendications 1 à 12, caractérisé en ce que pour alimenter la sonnerie du poste d'abonné avec une tension alternative d'appel l'un (b) des fils de la ligne d'abonné peut être connecté au moyen d'un commutateur (162) non pas à une source de courant (16') mais à un pôle (156) d'une source de tension alternative d'appel qui est d'autre part reliée à la terre, en ce qu'au moyen d'un commutateur (104) susceptible d'être actionné en même temps que le commutateur (162) l'autre fil (a) peut être relié à la terre par l'intermédiaire d'un condensateur (106) et en ce que dans l'autre position de commutation le commutateur (104) relie le condensateur (106) à l'impédance d'adaptation (96) et à la terre.

14. Montage selon l'une quelconque des revendications 1 à 13, caractérisé en ce que pour déterminer le courant circulant dans la ligne d'abonné il est monté dans l'un (a) des fils de cette dernière une résistance de mesure (14) qui est de préférence shuntée par un condensateur (164) agissant en tant que court-circuit partiel pour le courant alternatif d'appel et avec lequel est de préférence montée en parallèle la diode émittrice (168) d'un coupleur optoélectronique (166).

15. Montage selon la revendication 13 ou 14, caractérisé en ce que le condensateur (106) monté en série avec le commutateur (104) est connecté, entre la résistance de mesure (14) montée dans un fil (a) de la ligne d'abonné et la source de courant (16) reliée au même fil (a), à ce fil (a).

16. Montage selon l'une quelconque des revendications 1 à 15, caractérisé en ce que pour transmettre une tension alternative d'appel à la sonnerie du poste d'abonné une tension alternative (U) est amenée en tant que tension de commande à l'entrée (C) pour signaux entrants et en ce que simultanément est actionné un commutateur de préférence électronique (178) qui met une résistance (180) en circuit entre les fils (a; b) de la ligne d'abonné (fig. 2).

FIG. 1

FIG. 2